# EUROPEAN PATENT APPLICATION

(11) **EP 2 784 659 A1**
(43) Date of publication of application: **01.10.2014**
(21) Application number: 14160929.7
(22) Date of filing: 20.03.2014
(51) Int. Cl.: G06F 3/12

(54) **Data generation apparatus, data generation method, and program**

(30) Priority: 26.03.2013 JP 2013063636
(71) Applicant: FUJIFILM Corporation, Minato-ku Tokyo 106-8620 (JP)
(72) Inventor: Kuranoshita, Masashi, Tokyo, 107-0052 (JP)
(74) Representative: Klunker . Schmitt-Nilson . Hirsch

(57) **Abstract**

The invention displays virtual printed matter in a form close to an actual printed matter and an actual final product on a screen, and performs pagination work on the virtual printed matter, considering the form of the printed matter and the final product. A data generation apparatus includes a form information selection unit which selects form information related to the form of a final product and a printed matter, information acquisition units which acquire the selected form information, a pagination processing unit which paginates virtual printed matter simulating the printed matter based on the acquired form information to generate pagination data, and a display unit which three-dimensionally displays a process of paginating the virtual printed matter.

## Description

### BACKGROUND OF THE INVENTION

### 1. Field of the Invention

The present invention relates to a data generation apparatus and a data generation method which generate pagination data for paginating at least one piece of printed matter having a plurality of page regions, and a program which causes a computer to function as means for generating the pagination data.

### 2. Description of the Related Art

Lately, in the field of printing plate making, computer to plate (CTP), which directly forms a plate from electronic data without generating an intermediate product, has been widely used. In this case, a process of making the electronic data includes a process of generating pagination data for paginating a plurality of pages in the printed matter.

For example, in JP2011-242977A, virtual printed matter which simulates the printed matter is two-dimensionally displayed on a screen of a display unit, and paginating the virtual printed matter is disclosed. In this case, a user operates an operation unit while viewing the virtual printed matter which is two-dimensionally displayed, thereby paginating the virtual printed matter to make the pagination data. As a result, the virtual printed matter after being paginated is three-dimensionally displayed on a screen.

### SUMMARY OF THE INVENTION

Incidentally, when a final product (for example, a book) is obtained by processing the printed matter which is paginated by using the pagination data, by differences in material, thickness, gloss, and the like of paper configuring a final product, the bending of the paper when a page is turned and the appearance of the book are changed. In addition, the appearance of the book is changed in some cases even by a binding direction and a binding method of the book.

Therefore, in order to easily and efficiently perform pagination, it is desirable to paginate the virtual printed matter, considering the form of a printed matter and a final product.

However, in a technology of JP2011-242977A, the pagination is performed in a planar manner with the virtual printed matter two-dimensionally displayed on a screen of a display unit. Therefore, the pagination is not performed in a three-dimensional form close to an actual printed matter and an actual final product.

The invention is made considering the above problems, and an object thereof is to provide a data generation apparatus, a data generation method, and a program, which can display virtual printed matter in a form close to an actual printed matter and an actual final product on a screen, and paginate the virtual printed matter considering the form of the printed matter and the final product.

The invention relates to a data generation apparatus and a data generation method which generate pagination data for paginating at least one piece of printed matter having a plurality of page regions, and a program for causing a computer to function as means for generating the pagination data.

Then, the invention has the following configuration so as to achieve the above object.

In one embodiment, there is provided the data generation apparatus including a form information selection unit which selects form information related to the form of a final product obtained by processing printed matter, and related to the form of the printed matter; information acquisition units which acquire the form information selected by the form information selection unit; a pagination processing unit which generates pagination data by paginating virtual printed matter simulating the printed matter based on the form information acquired by the information acquisition units; and a display unit which three-dimensionally displays a process of paginating the virtual printed matter by the pagination processing unit.

In another embodiment, there is provided a data generation method including selecting form information which is related to the form of a final product obtained by processing printed matter, and of the printed matter using a form information selection unit; acquiring the form information selected by the form information selection unit using information acquisition units; generating the pagination data by paginating virtual printed matter, which simulates the printed matter, using a pagination processing unit based on the form information acquired by the information acquisition units; and three-dimensionally displaying a process of paginating the virtual printed matter by the pagination processing unit on a display unit.

In still another embodiment, there is provided a program which causes a computer to function as a form information selection unit which selects form information related to the form of a final product obtained by processing the printed matter, and of the printed matter, information acquisition units which acquire the form information selected by the form information selection unit, a pagination processing unit which generates the pagination data by paginating virtual printed matter, which simulates the printed matter, based on the form information acquired by the information acquisition units, and a display unit which three-dimensionally displays a process of paginating the virtual printed matter by the pagination processing unit.

In this manner, the process of paginating the virtual printed matter is three-dimensionally displayed on the display unit in the invention. In addition, considering form information related to the form of actual printed matter and an actual final product, the virtual printed matter is paginated and pagination data are generated in the invention. In this case, the pagination data are generated based on the form information selected by the form information selection unit. That is, the form information selected by the form information selection unit and the pagination data three-dimensionally displayed on the display unit in the process of pagination are uniquely correlated with each other.

As a result, it is possible to paginate the virtual printed matter by three-dimensionally displaying the virtual printed matter on the display unit in a form close to the form of printed matter and a final product. Therefore, a user can generate desired pagination data by operating the virtual printed matter which is a three-dimensional model displayed on the display unit. Accordingly, it is possible to easily and efficiently paginate the virtual printed matter in the invention.

In order to allow the data generation apparatus to function as described above, for example, it is preferable that the data generation apparatus have a function of a Graphical User Interface (GUI). Accordingly, the user can select desired form information by operating the form information selection unit while viewing the virtual printed matter three-dimensionally displayed on a screen of the display unit. As a result, it is possible to change a method of viewing the virtual printed matter according to the selected form information. In other words, it is possible to display the virtual printed matter in a form closer to actual printed matter and an actual final product.

In addition, as described above, the form information may be any information related to the form of the printed matter and the final product. Such information includes, for example, a material of the printed matter, a binding direction and a binding method of folds at the time of the folds being formed by folding the printed matter while being processed, and a page layout in the printed matter. In addition, information related to the material of the printed matter is paper information which includes type, size, material, basis weight, rigidity, and gloss of paper configuring the printed matter.

Then, it is preferable that the data generation apparatus further include a paper information accumulation unit in which paper information of a plurality of types of paper is accumulated.

In this case, the form information selection unit selects any one piece of paper information from among the information on each type of paper accumulated in the paper information accumulation unit. In addition, the information acquisition units acquire paper thickness according to the one piece of paper information selected by the paper thickness information acquisition unit in the form information selection unit from the paper information accumulation unit. Furthermore, a creep amount calculation unit calculates an amount of creep of a final product based on the number of pages paginated in printed matter and the paper thickness.

Accordingly, the pagination processing unit can generate pagination data based on paper thickness, an amount of creep, a binding direction and a binding method of folds, and a page layout.

Therefore, when a user selects one piece of paper information by operating the form information selection unit, a paper thickness is automatically acquired and an amount of creep is automatically calculated in the data generation apparatus. Accordingly, it is possible to reflect the paper thickness and the amount of creep in pagination data. As a result, it is possible to three-dimensionally display virtual printed matter in a form closer to actual printed matter, and to more easily perform pagination.

According to the invention, a process of paginating virtual printed matter is three-dimensionally displayed on a display unit. In addition, pagination data are generated by paginating the virtual printed matter, considering form information related to the form of actual printed matter and an actual final product in the invention. In this case, the pagination data are generated based on the form information selected by a form information selection unit. That is, the form information selected by the form information selection unit and the pagination data three-dimensionally displayed on a display unit in the process of pagination are uniquely correlated with each other.

Accordingly, it is possible to paginate virtual printed matter by three-dimensionally displaying the virtual printed matter on the display unit in a form close to the form of the printed matter and the final product. Therefore, a user can generate desired pagination data by operating the virtual printed matter which is a three-dimensional model displayed on the display unit. Thus, it is possible to easily and efficiently paginate the virtual printed matter in the invention.

### BRIEF DESCRIPTION OF THE DRAWINGS

Fig. 1 is a schematic explanatory view of a printing system equipped with a data generation apparatus according to the embodiment.
Fig. 2 is a functional block diagram of the data generation apparatus of Fig. 1.
Fig. 3 is a flowchart of pagination work.
Fig. 4 is a description diagram which shows a state where a 3D view screen is started.
Fig. 5 is a description diagram which shows a state where a desired page is dragged onto paper displayed on the 3D view screen.
Fig. 6 is a description diagram which shows a state where two pages are paginated on one piece of paper.
Fig. 7 is a description diagram which shows a state where a binding direction and a binding method of a virtual printed matter are displayed on the 3D view screen.
Fig. 8 is a description diagram which shows a state where paper information is displayed.
Fig. 9A is a description diagram which shows a state where a virtual printed matter having a predetermined amount of creep is three-dimensionally displayed, and Fig. 9B is a description diagram which shows a state where a virtual printed matter having an amount of creep of substantially zero is three-dimensionally displayed.
Fig. 10 is a description diagram which shows a case where a state of turning a page of the virtual printed matter is three-dimensionally displayed on the 3D view screen.
Fig. 11 is a description diagram which shows a state where the virtual printed matter after the pagination is two-dimensionally displayed.

### DESCRIPTION OF THE PREFERRED EMBODIMENTS

A data generation apparatus according to the invention will be described below in detail by raising an appropriate embodiment in relation to a data generation method and a program, which perform the data generation apparatus, while referring to accompanying drawings.

### Configuration of the embodiment

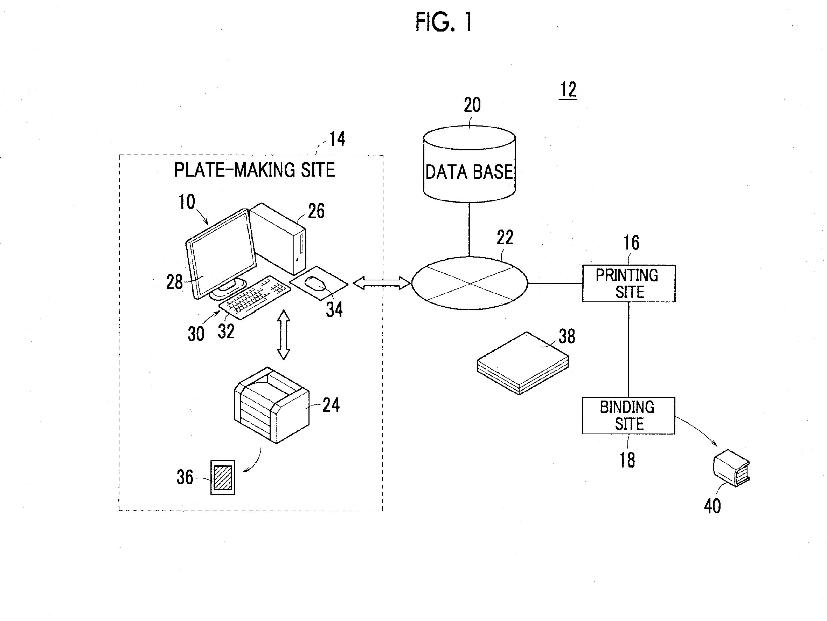

Fig. 1 is a schematic description diagram of a printing system 12 which is equipped with a data generation apparatus 10 according to the embodiment. The printing system 12 basically includes a plate-making site 14, a printing site 16, a binding site 18, a database server 20, and a LAN 22. The plate-making site 14 includes the data generation apparatus 10 and a proof printer 24.

The data generation apparatus 10 generates editing data (page description data) on a page-by-page basis in a page description language (hereinafter, referred to as PDL), for example, data in a PDL format which are formed of color channels of four colors (CMYK) and three colors (RGB).

Here, the PDL is a language which describes image information such as format information like letters, figures, and the like, position information, color information (including concentration information), and the like on a "page" which is an output unit of printing, display, and the like. For example, Portable Document Format (PDF, defined in IS032000-1:2008), PostScript (registered trademark) of Adobe Systems Incorporated, XML Paper Specification (XPS), and the like are known as the PDL.

The data generation apparatus 10 has respective functions of performing desired image processing, for example, pre-flight processing, color conversion processing, placement processing, or the like, on the edition data on a page basis, and then of converting the edition data into data in a raster format (for example, bitmap or TIFF) and transmitting printing data to the proof printer 24.

The data generation apparatus 10 includes a main body unit 26, a display unit 28, and an input unit 30 (a keyboard 32 and a mouse 34). As a pointing device, instead of the mouse 34, a trackpad or a trackball may be used.

The proof printer 24 is an output device to obtain a proof paper 36 for performing proofreading. As the proof printer 24, direct digital color proofer (DDCP) which has the same printing performance as an offset printer, an inkjet color proofer, a color laser printer with a low resolution (electrophotographic mode), an inkjet printer, and the like are used.

A database server 20 maintains, updates, and deletes various types of data files necessary for production of a final printed matter 40 (final product). The various types of data files include material data (content) from a production company, which is not illustrated, proofreading data, printing-plate data, job ticket (for example, a job definition format (JDF) file), an International Color Consortium (ICC) profile, color sample data, and the like.

The LAN 22 is constructed based on communications standards such as Ethernet (registered trademark) and the like. Then, the plate-making site 14, the printing site 16, and the database server 20 are connected to each other through the LAN 22. For example, when the plate-making site 14 and the printing site 16 are geographically spaced from each other, the printing-plate data are transmitted or received between the plate-making site 14 and the printing site 16 through the LAN 22.

In the printing site 16, an image processing device which performs desired image processing by using the printing-plate data, a plate setter for making a printing plate, an offset printer for obtaining printed matter (a plurality of printing media 38) by printing a desired image on various types of media, and the like are placed. Instead of the plate setter and the offset printer, a digital printer which can perform direct printing from the printing-plate data may be provided.

In the binding site 18, various types of devices are placed, which perform production processes (processing) such as surface processing, paper folding, collating, binding, cutting, cover-attachment, and the like on a plurality of printing media 38 supplied from the printing site 16 side. Then, by sequentially performing the production processes, the final printed matter 40 (a hardcover book in the illustrated example) is produced.

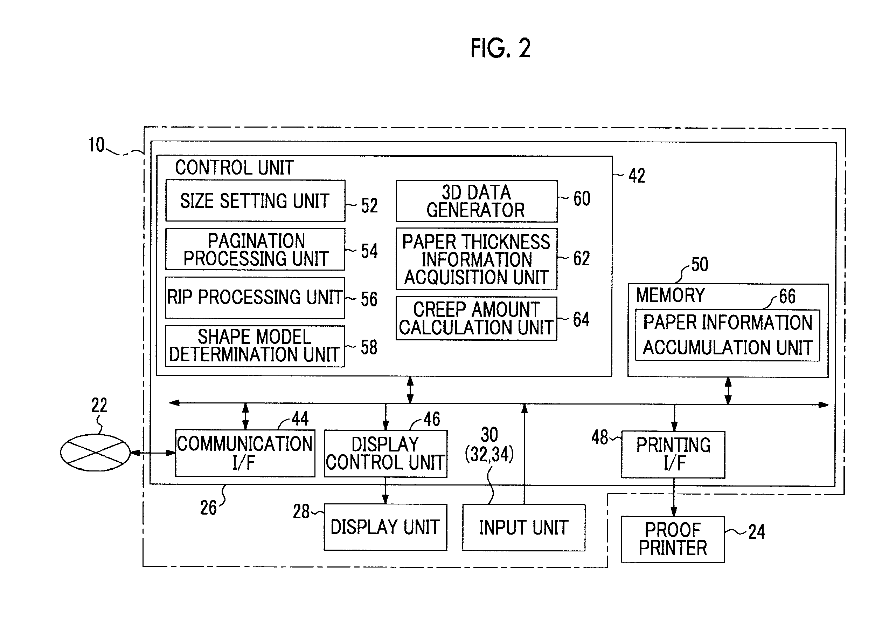

Fig. 2 is a functional block diagram of the data generation apparatus 10 shown in Fig. 1. A main body unit 26 includes a control unit 42 (information acquisition unit), a communication I/F 44, a display control unit 46, a printing I/F 48, and a memory 50.

The communication I/F 44 is an interface which transmits and receives an electrical signal to and from an external device. For example, it is possible to acquire material data supplied from a production company, which is not illustrated. In addition, it is possible to acquire various types of information such as the printing-plate data, the ICC profile, and the like, which is managed and maintained by the database server 20.

The display control unit 46 is a control circuit which drive-controls the display unit 28 according to a control of the control unit 42. The display control unit 46 outputs a display control signal to the display unit 28 through an I/F which is not illustrated, thereby driving the display unit 28. Accordingly, the display unit 28 can display various types of images.

The printing I/F 48 is an interface which transmits an electrical signal as printing data. The proof printer 24 can print desired proof paper 36 by the printing I/F 48.

The memory 50 stores a program and data necessary for controlling each portion by the control unit 42. In addition, a paper information accumulation unit 66 is provided in the memory 50. Information on a plurality of types of paper (paper information) available for printing as the printing media 38 and the final printed matter 40 is accumulated in the paper information accumulation unit 66. More specifically, the paper information includes type, size, material, basis weight, rigidity, and gloss of paper configuring the printing media 38. That is, the paper information is information related to material of the paper configuring the printing media 38.

The control unit 42 is configured to have a processor such as a CPU and the like. The control unit 42 can realize a function of a size setting unit 52, a pagination processing unit 54, an RIP processing unit 56, a shape model determination unit 58, a 3D data generator 60, a paper thickness information acquisition unit 62, and a creep amount calculation unit 64 by reading and performing a program stored in the memory 50. Moreover, when a user who views the content of a display on the display unit 28 operates the input unit 30 (form information selection unit) to perform a predetermined instruction, each portion of the control unit 42 performs processing according to the instruction. That is, the data generation apparatus 10 includes a function of the GUI which performs predetermined processing according to an operation of the user, who views the content of a display on the display unit 28, on the input unit 30.

More specifically, when the pagination processing unit 54 generates pagination data for paginating the printing media 38, the size setting unit 52 (information acquisition unit) sets the size of paper specified by the operation by a user of the input unit 30 among sizes of paper included in the plurality of paper information accumulated in the paper information accumulation unit 66 as the size of paper of the printing media 38 output from the printing site 16.

Moreover, when a user operates the input unit 30 and selects paper information according to desired paper among the plurality of paper information accumulated in the paper information accumulation unit 66, the paper thickness information acquisition unit 62 (information acquisition unit) calculates paper thickness according to the paper information by using the selected paper information. In addition, the creep amount calculation unit 64 (information acquisition unit) calculates the amount of creep of the final printed matter 40 based on the number of pages paginated in the printing media 38 and the paper thickness.

The pagination processing unit 54 paginates virtual printed matter which simulates the printing media 38, thereby generating pagination data for paginating the printing media 38. In this case, the pagination processing unit 54 makes the pagination data based on form information related to the form of the printing media 38 and the final printed matter 40, such as paper size, paper thickness, amount of creep, paper information and the like.

That is, the pagination processing unit 54 makes edition data on a page basis from material data configured from letters, figures, designs, photos and the like, considering the form information of the printing media 38 and the final printed matter 40. Then, the pagination processing unit 54 makes pagination data (for example, job ticket) for performing pagination on a page basis on paper (virtual printed matter) of the set size of paper.

In the following description, there is a case where virtual printed matter is used to mean the virtual printed matter simulating the folds and the final printed matter 40 as well as the virtual printed matter simulating the printing media 38.

Then, in a production process of pagination data until generating the pagination data by paginating the virtual printed matter from a state of paper before pagination, the pagination processing unit 54 outputs various types of data including paper to a RIP processing unit 56 in each of the production processes.

The pagination data include fold data and grid data. The fold data are data defined by a position of a folding line for forming folds by folding the printing media 38 in the binding site 18, a direction (folding direction) of folding the printing media 38 along the folding line, and a folding order. The grid data are data defined by a position of a plurality of pages paginated in the printing media 38, a page number of each page, and a direction of each page.

Whenever data including paper are input from the pagination processing unit 54, the RIP processing unit 56 performs RIP processing and converts the data into data in a raster format. For example, when data which shows a paginated paper are input, the RIP processing unit 56 respectively places edition data on a page basis in a predetermined data region and adds mark information such as trim mark and the like to perform rasterization processing, thereby obtaining pagination data after the RIP processing.

The shape model determination unit 58 determines which model between a three-dimensional shape model and a two-dimensional shape model to use when displaying an image of the virtual printed matter among the data in a raster format on a screen of the display unit 28. In this case, the three-dimensional shape model includes, for example, a shape model which shows an appearance of a hard-cover book or a state of turning a page after opening the hard-cover book. The two-dimensional shape model includes, for example, a shape model which shows a state of allocating pages to the printing media 38 in a planar manner. In this case, a user may operate the input unit 30 to instruct the shape model determination unit 58 to determine a desired shape model in advance or may operate the input unit 30 to instruct the shape model determination unit 58 to determine a desired shape model in each of the processes described above.

The 3D data generator 60 makes a three-dimensional image (3D preview data) of the virtual printed matter according to the shape model determined by the shape model determination unit 58.

Therefore, with regard to an image of the virtual printed matter among the data in a raster format, the display control unit 46 outputs a display control signal according to 3D preview data made by the 3D data generator 60 to the display unit 28. In addition, with regard to data other than the image of the virtual printed matter, the display control unit 46 outputs a display control signal according to the data in a raster format to the display unit 28. As a result, it is possible to three-dimensionally display the virtual printed matter on the screen of the display unit 28.

By the operation by a user of the input unit 30, when the shape model determination unit 58 determines a display of the virtual printed matter using the two-dimensional shape model, the 3D data generator 60 stops making the 3D preview data. As a result, the display control unit 46 outputs a display control signal according to the data in a raster format to the display unit 28 to display an image of the virtual printed matter in a two-dimensional display on the screen of the display unit 28.

### Operations in the embodiment

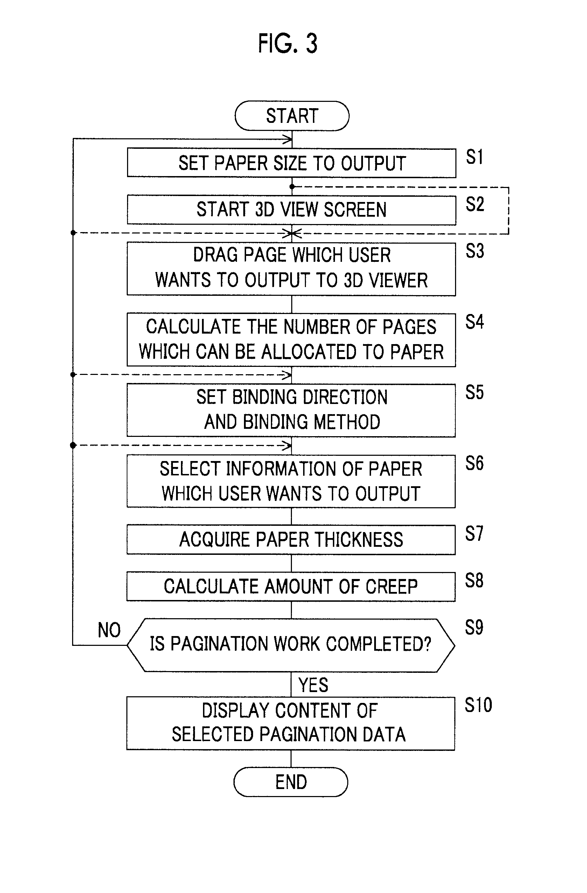

The data generation apparatus 10 according to the embodiment is basically configured as described above. Next, an operation (data generation method) of the data generation apparatus 10 will be described referring to Figs. 3 to 11.

Here, a case where an image of the virtual printed matter is three-dimensionally displayed on the screen of the display unit 28 in a production process of pagination data by paginating the virtual printed matter (a case where 3D preview data are displayed) will be described. Moreover, in an operation description of the data generation apparatus, a case of performing pagination by allocating pages of A4 size to paper of SRA3 size will be described as an example. Furthermore, the operation of the data generation apparatus will be described referring to Figs. 1 and 2 when necessary.

First, a user operates the input unit 30 and instructs the display unit 28 to display a list of paper sizes in a step S1 of Fig. 3. Accordingly, the control unit 42 reads information on paper size from the paper information accumulation unit 66 according to the content of an instruction from the mouse 34. The RIP processing unit 56 makes data in a raster format according to the information on paper size, and the display control unit 46 outputs a display control signal of the data in a raster format to the display unit 28. As a result, the list of paper sizes accumulated in the paper information accumulation unit 66 is displayed on a screen 92 of the display unit 28.

The user operates the mouse 34 to select a desired paper size (SRA3 size) of the printing media 38. Accordingly, the size setting unit 52 sets the paper size according to the content of an instruction from the input unit 30 as the paper size of the printing media 38. In this manner, by selecting in advance a desired paper size from the list of paper sizes displayed on the display unit 28 to perform a setting, the user can do pagination work of three-dimensional display after step S2 without being aware of the paper size.

In step S2, the user operates the input unit 30 and instructs a screen (3D view screen) for paginating a paper of the paper size set in advance to be started. Accordingly, the RIP processing unit 56 generates data in a raster format including paper of the paper size set by the size setting unit 52 based on the content of an instruction from the input unit 30. Moreover, the shape model determination unit 58 determines displaying the paper on the screen of the display unit 28 using the three-dimensional shape model based on the content of an instruction. A 3D data generator 60 generates an image of paper as a three-dimensional image (3D preview data) among the data in a raster format according to the content of a determination by the shape model determination unit 58.

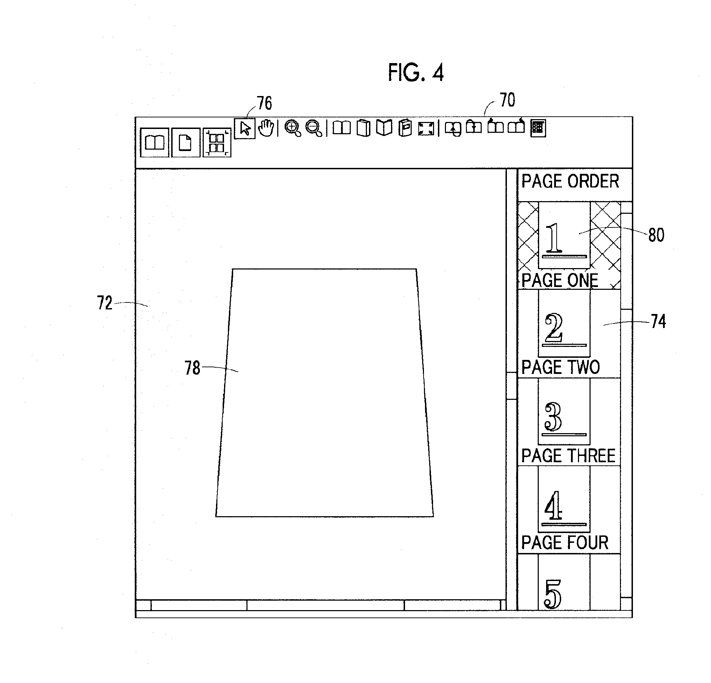

As a result, with regard to the image of paper among the data in a raster format, the display control unit 46 outputs a display control signal according to 3D preview data to the display unit 28. On the other hand, with regard to data other than the 3D preview data, the display control unit 46 outputs a display control signal according to the data in a raster format to the display unit 28. Accordingly, as shown in Fig. 4, a 3D view screen 70 is displayed (started) on the screen of the display unit 28.

Fig. 4 illustrates the content of a display at the time of starting the 3D view screen 70. The 3D view screen 70 is configured to have a display region 72 which is relatively wide, a display region 74 which is displayed on a right side and is relatively narrow, and a display region of an icon group 76. An image in which the paper 78 (3D preview data) before being paginated is seen from above is three-dimensionally displayed in the display region 72. In addition, each page 80 (A4 size) is sequentially displayed from the top in the display region 74.

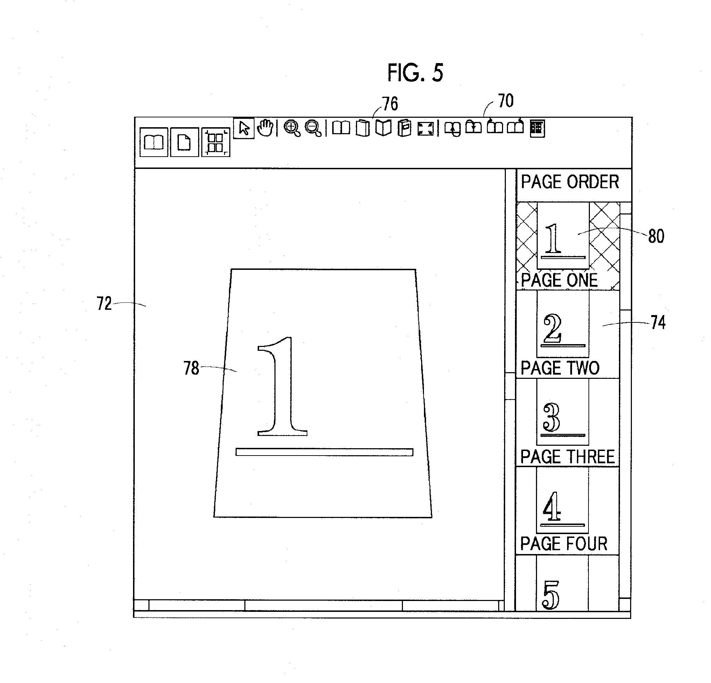

In the next step S3, the user operates the mouse 34, and for example, clicks a first page (page 80) displayed in the display region 74 and drags the first page to paper 78 in the display region 74. Accordingly, as shown in Fig. 5, a first page (page 82) is three-dimensionally displayed in the display region 72. In Figs. 4 and 5, a portion of the first page clicked by the mouse 34 is displayed in a shaded manner in the display region 74.

Additionally, in step S3, the 3D data generator 60 makes 3D preview data according to the page 82 by the operation by a user of the mouse 34 in the same manner as in Step S2. Moreover, the display control unit 46 outputs a display control signal according to the 3D preview data to the display unit 28 to three-dimensionally display the page 82 in the display region 72.

Fig. 5 illustrates a case of dragging the first page, but it is also possible to three-dimensionally display a case of dragging another page in the same manner. That is, a user can operate the mouse 34 while viewing the content of a display (3D preview data) on the display unit 28, and perform allocation work of the desired page 80 to the paper 78.

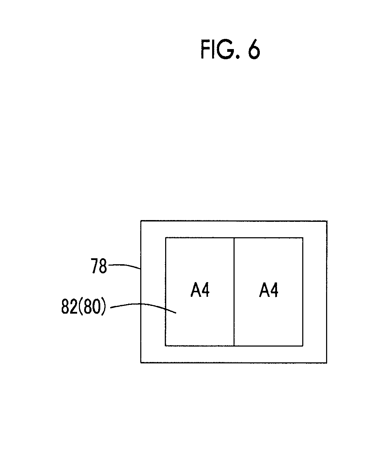

On the other hand, in step S4, the pagination processing unit 54 calculates the number of pages which can be allocated to one piece of paper 78 from the size of the paper 78 and the size of the page 80. As described above, the size of the paper 78 is SRA3, and the size of the page 80 is A4, such that the pagination processing unit 54 determines to allocate two pages on one surface of one piece of the paper 78 as shown in Fig. 6.

In next step S5, the user operates the mouse 34, clicks a desired icon in the icon group 76, and instructs the control unit 42 to perform a three-dimensional display according to the form of folds or the final printed matter 40 (for example, appearance of folds).

Accordingly, the RIP processing unit 56 generates the data in a raster format which includes the virtual printed matter simulating the folds according to the content of an instruction from the input unit 30. In addition, the shape model determination unit 58, according to the content of an instruction, determines to display the virtual printed matter on the 3D view screen 70 of the display unit 28 using the three-dimensional shape model which displays the appearance of the folds. The 3D data generator 60 generates an image of the virtual printed matter as a three-dimensional image (3D preview data) according to the shape model determined by the shape model determination unit 58.

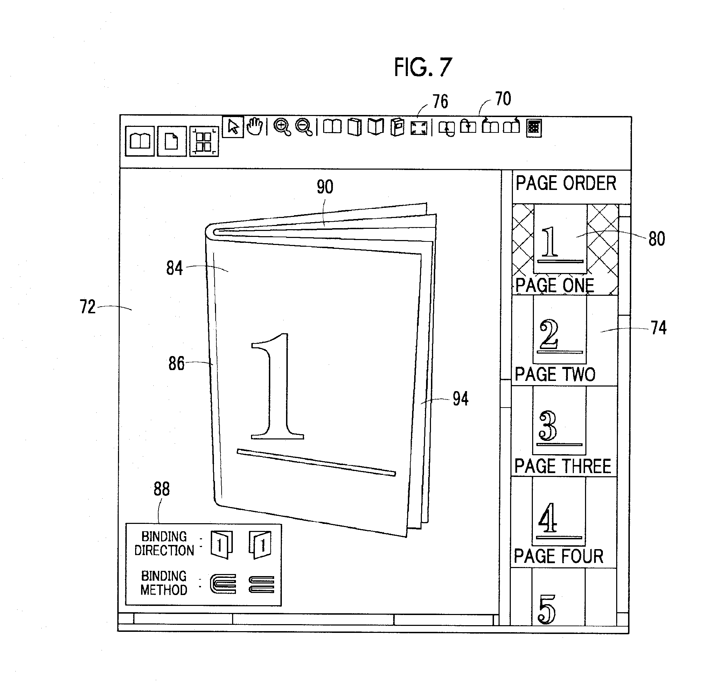

As a result, with regard to an image of the virtual printed matter among the data in a raster format, the display control unit 46 outputs a display control signal according to 3D preview data to the display unit 28. In addition, with regard to data other than the 3D preview data, the display control unit 46 outputs a display control signal according to the data in a raster format to the display unit 28. Accordingly, as shown in Fig. 7, the appearance of the virtual printed matter 84 which simulates the folds is three-dimensionally displayed in the display region 72.

Here, when a user operates the mouse 34 to double-click the spine 86 of the virtual printed matter 84, a display region 88 which shows a binding direction and a binding method of the virtual printed matter 84 is displayed in the display region 72. Therefore, the user operates the mouse 34 to click a mark indicating a left binding (mark on a left side of a binding direction) or a mark indicating a right binding (mark on a right side of the binding direction), and thereby the user can instruct the control unit 42 to perform the binding direction. In addition, the user operates the mouse 34 to click a mark indicating saddle stitching (a mark on a left side of a binding method) or a mark indicating side stitching (mark on a right side of the binding method), and thereby the user can instruct the control unit 42 to perform the binding method.

As a result, the pagination processing unit 54 can reflect the binding direction and the binding method indicated in the content of an instruction from the mouse 34 in pagination data. Moreover, the display unit 28 can three-dimensionally display the virtual printed matter 84 according to the binding direction and the binding method instructed by the user. Fig. 7 shows a case where a hard-cover book is displayed as the virtual printed matter 84. Therefore, in the virtual printed matter 84, each page 90 and a cut end 94 of the hard-cover book are illustrated.

In addition, in step S5, it is natural that the pagination processing unit 54, the RIP processing unit 56, the shape model determination unit 58, the 3D data generator 60, the display control unit 46, and the display unit 28 perform predetermined processing for three-dimensionally displaying the virtual printed matter 84 according to the operation by a user of the mouse 34 in the same manner as in steps S2 to S4.

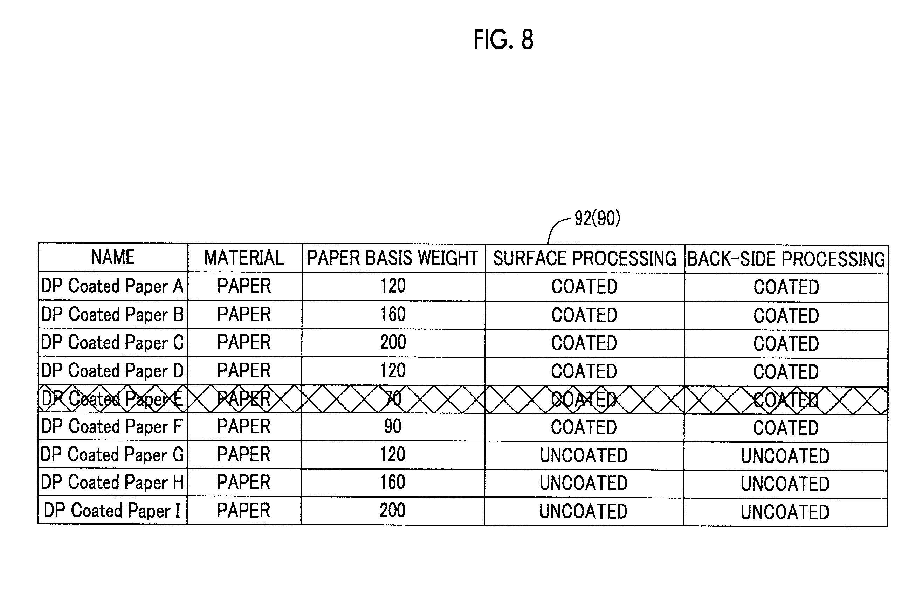

In next step S6, the user operates the mouse 34 and clicks a desired icon in the icon group 76, thereby instructing the display unit 28 to display paper information. Accordingly, the control unit 42 reads the paper information from the paper information accumulation unit 66 according to the content of an instruction from the mouse 34. In addition, the RIP processing unit 56 makes data of paper information in a raster format, and the display control unit 46 outputs a display control signal of the data in a raster format to the display unit 28. As a result, as shown in Fig. 8, a list of the paper information accumulated in the paper information accumulation unit 66 is displayed on the screen 92 of the display unit 28.

The paper information shown in Fig. 8 is information of paper which can be used in the printing media 38 and the final printed matter 40. Accordingly, various types of information on types of coated paper or uncoated paper for direct printing, material of paper, basis weight, and processing form of the surface and the back side (coated or uncoated) is displayed for each paper on the screen 92.

Then, the user operates the mouse 34 to select paper information of paper that the user wants to output as the printing media 38 and the final printed matter 40 from the list of paper information displayed on the screen 92. In Fig. 8, the user operates the mouse 34 to display the selected paper information in a shaded manner.

Accordingly, the pagination processing unit 54 reflects the paper information shown in the content of an instruction from the mouse 34 in pagination data. The RIP processing unit 56 makes data in a raster format according to the pagination data after the reflection. The 3D data generator 60 makes 3D preview data with regard to an image of the virtual printed matter 84 among the data in a raster format As a result, the display unit 28 can three-dimensionally display the virtual printed matter 84 in a form according to the paper information selected by the user.

In next step S7, from the form of basis weight and surface processing among the paper information, which is selected by the user, the paper thickness information acquisition unit 62 specifies paper thickness of paper according to the paper information. In addition, in step S8, the creep amount calculation unit 64 uses the paper thickness acquired by the paper thickness information acquisition unit 62 and the number of pages in the virtual printed matter 84 to calculate the amount of creep at the cut end 94. Accordingly, the pagination processing unit 54 reflects the paper thickness and the amount of creep in the pagination data.

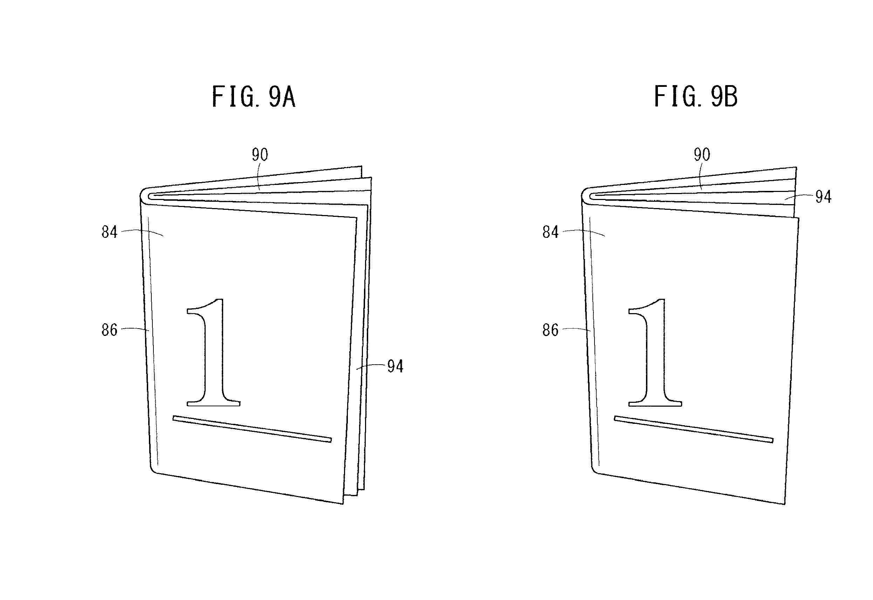

As a result, the RIP processing unit 56 makes data in a raster format according to the pagination data after the reflection. The 3D data generator 60 makes 3D preview data with regard to an image of the virtual printed matter 84 among the data in a raster format. Accordingly, the display unit 28 can three-dimensionally display the virtual printed matter 84 in a form according to the paper thickness and the amount of creep as shown in Figs. 9A and 9B. Fig. 9A shows the virtual printed matter 84 having a predetermined amount of creep, and Fig. 9B shows the virtual printed matter 84 having an amount of creep of substantially zero.

In next step S9, the user views a three-dimensional display of the virtual printed matter 84 displayed on the 3D view screen 70 to confirm whether making the pagination data is completed or not (whether paginating the virtual printed matter 84 is finished or not).

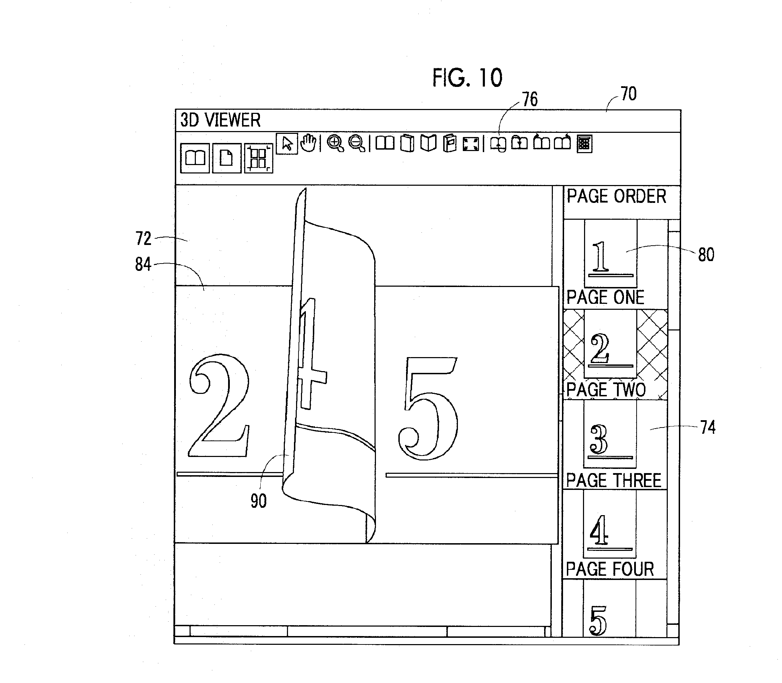

In this case, in addition to the appearance of the hard-cover book shown in Figs. 7, 9A, and 9B, the user may confirm whether making the pagination data is completed or not from a state of opening the hard-cover book and turning the page 90 as shown in Fig. 10.

When three-dimensionally displaying a state of turning the page 90, the user operates the mouse 34 to click a desired icon in the icon group 76. Accordingly, the shape model determination unit 58 determines to change a shape model of the virtual printed matter 84 to a three-dimensional model according to the state of turning the page 90. The 3D data generator 60 generates 3D preview data based on the three-dimensional model after the change with regard to an image of the virtual printed matter 84 among the data in a raster format made by the RIP processing unit 56.

Accordingly, the display control unit 46 outputs various types of display control signals including a display control signal of 3D preview data to the display unit 28. The display unit 28 changes the three-dimensional display of the virtual printed matter 84 to the three-dimensional display of the state of turning the page 90 shown in Fig. 10 according to the display control signal.

Accordingly, the user views the three-dimensional display of the appearance of the virtual printed matter 84 in Figs. 7, 9A, and 9B to determine whether the paper thickness and the amount of creep are appropriate or not. Moreover, the user views the state of turning the page 90 shown in Fig. 10 to determine whether a type of paper, page allocation, and the like are appropriate or not.

Then, in step S9, if pagination work is not completed (NO in step S9), the procedure returns to any of steps S1, S3, S5, and S6 and performs the pagination work again according to a process which is not completed. In addition, when the procedure returns to step S1 to perform the work, the 3D view screen 70 is already started, such that the processing in step S2 may not be repeated.

In this manner, the user can confirm a finishing result of the virtual printed matter 84 while viewing the content of a display on the 3D view screen 70, and make the pagination data.

When confirming that the pagination work is completed (YES in step S10), the user operates the mouse 34 to click a desired icon in the icon group 76, and thereby the user instructs the display unit 28 to display the content of the set pagination data. The pagination processing unit 54 confirms that the pagination work is completed using an instruction from the mouse 34, and then, stores the pagination data in the memory 50 and outputs the pagination data to the RIP processing unit 56. The RIP processing unit 56 makes data in a raster format with regard to the input pagination data.

The shape model determination unit 58 determines to set an image of the virtual printed matter 84 as an image according to a two-dimensional model according to the content of an instruction from the mouse 34. The 3D data generator 60 does not make 3D preview data, but outputs data in a raster format to the display control unit 46 based on a determination result by the shape model determination unit 58.

The display control unit 46 outputs a display control signal according to the two-dimensional display to the display unit 28 with regard to the image of the virtual printed matter 84 among data in a raster format. On the other hand, the display control unit 46 outputs a display control signal according to the data in a raster format to the display unit 28 with regard to data other than the virtual printed matter 84.

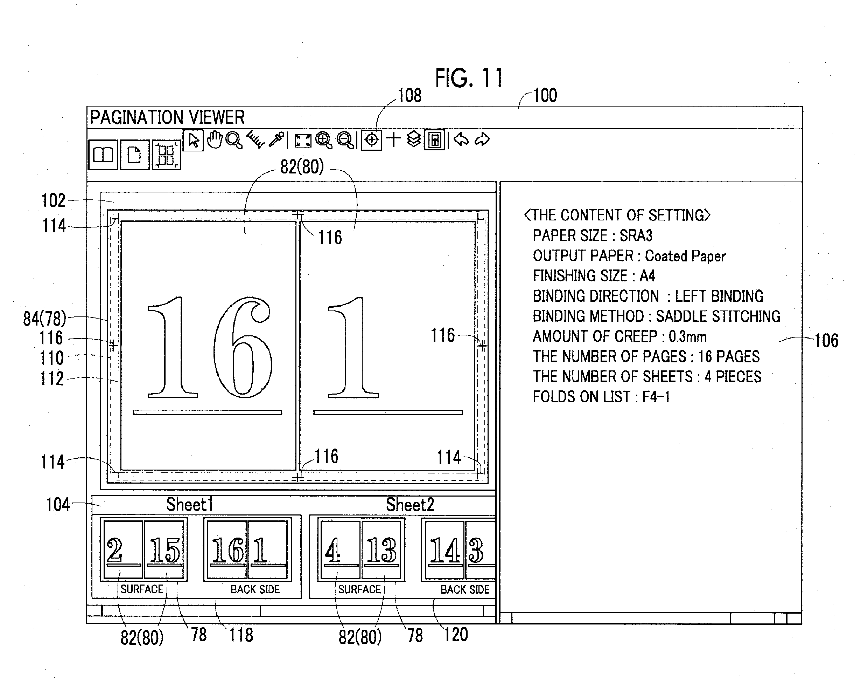

Fig. 11 shows a setting completion screen 100 which displays the pagination data after the setting on the display unit 28.

The setting completion screen 100 is configured to have display regions 102 and 104 displayed on a left side, a display region 106 displayed on a right side, and a display region which displays an icon group 108.

The virtual printed matter 84 in which two pages are allocated on the paper 78 is two-dimensionally displayed in the display region 102. In this case, a region 110 for cutting out the image of the virtual printed matter 84 (rendered bitmap), a plate surface 112, and a plurality of trim marks 114 and 116 are allocated to the virtual printed matter 84.

Moreover, a plurality of display regions 118 and 120 are provided in the display region 104. In each of the display regions 118 and 120, a state where a plurality of pages 80 (82) are allocated on the surface and the back side of one piece of paper 78 is two-dimensionally displayed.

Furthermore, the detailed content of the set pagination data is displayed in the display region 106. "F4-1" shows that pagination data are fold data, the number of sheets is four, and the first page of folds is page one.

### Effect of the embodiment

As described above, a process of paginating the virtual printed matter 84 is three-dimensionally displayed on the display unit 28 in the embodiment. In addition, the virtual printed matter 84 is paginated and pagination data are generated considering form information related to the form of an actual printing media 38 and an actual final printed matter 40 in the embodiment. In this case, the pagination data are generated based on the form information selected (instructed) by an operation by a user of the input unit 30. That is, the selected form information and the pagination data three-dimensionally displayed on the display unit 28 in the process of pagination are uniquely correlated with each other.

Accordingly, it is possible to paginate the virtual printed matter 84 by three-dimensionally displaying the virtual printed matter 84 on the display unit 28 in a form close to the form of the printing media 38 and the final printed matter 40. Therefore, a user can generate desired pagination data by operating the virtual printed matter 84 which is a three-dimensional model displayed on the display unit 28. Accordingly, it is possible to easily and efficiently paginate the virtual printed matter 84 in the embodiment.

That is, since the data generation apparatus 10 includes a function of GUI, the user can operate the mouse 34 while viewing the virtual printed matter 84 three-dimensionally displayed on the 3D view screen 70 of the display unit 28. Accordingly, it is possible to change a method of viewing the virtual printed matter 84 according to the selected form information. As a result, the virtual printed matter 84 can be displayed in a form closer to the actual printing media 38 and the actual final printed matter 40.

The form information may be any information related to the form of the printing media 38 and the final printed matter 40 in the embodiment. Accordingly, the form information may not be limited to the information described above, but may include various types of information such as bleeding, finishing size, and the like as form information.

Moreover, the user can select desired paper information among the paper information on a plurality of types of paper accumulated in the paper information accumulation unit 66 by operating the mouse 34. Accordingly, the paper thickness information acquisition unit 62 can acquire paper thickness according to the selected paper information, and the creep amount calculation unit 64 can calculate an amount of creep of the final printed matter 40 based on the number of paginated pages and the paper thickness. As a result, the pagination processing unit 54 can generate pagination data based on the paper thickness, the amount of creep, a binding direction and a binding method of the folds, and the page layout.

In other words, when the user selects paper information by operating the mouse 34, it is possible to automatically specify paper thickness and an amount of creep in the data generation apparatus 10 and to reflect the specified result in pagination data. Accordingly, it is possible to three-dimensionally display the virtual printed matter 84 in a form closer to the actual final printed matter 40, and to more easily perform the pagination.

It is natural that the invention is not limited to the above description, but various modifications are possible.

## Claims

1. A data generation apparatus which generates pagination data for paginating at least one piece of printed matter having a plurality of page regions, comprising:
a form information selection unit which selects form information related to the form of a final product obtained by processing the printed matter, and of the printed matter;
information acquisition units which acquire the form information selected by the form information selection unit;
a pagination processing unit which generates the pagination data by paginating virtual printed matter simulating the printed matter based on the form information acquired by the information acquisition units, and
a display unit which three-dimensionally displays a process of paginating the virtual printed matter by the pagination processing unit.

2. The data generation apparatus according to claim 1,
wherein the form information is information related to at least one of a material of the printed matter, a binding direction and a binding method of folds when forming the folds by folding the printed matter while being processed, and a page layout in the printed matter.

3. The data generation apparatus according to claim 2,
wherein information related to the material of the printed matter is paper information which includes at least one of type, size, material, basis weight, rigidity, and gloss of paper configuring the printed matter.

4. The data generation apparatus according to claim 3, further comprising:
a paper information accumulation unit in which paper information on a plurality of types of paper is accumulated,
wherein the form information selection unit selects any one piece of paper information among the paper information on each type of paper accumulated in the paper information accumulation unit,
the information acquisition units include a paper thickness information acquisition unit which acquires paper thickness according to the one piece of paper information selected by the form information selection unit, and a creep amount calculation unit which calculates an amount of creep of the final product based on the number of paginated pages in the printed matter and the paper thickness, and
the pagination processing unit generates the pagination data based on at least one of the paper thickness, the amount of creep, a binding direction and a binding method of the folds, and the page layout.

5. A data generation method which generates pagination data for paginating at least one piece of printed matter having a plurality of page regions, the method comprising:
selecting form information which is related to the form of a final product obtained by processing the printed matter, and of the printed matter, using a form information selection unit;
acquiring the form information selected by the form information selection unit using information acquisition units;
generating the pagination data by paginating virtual printed matter, which simulates the printed matter, using a pagination processing unit based on the form information acquired by the information acquisition units; and
three-dimensionally displaying a process of paginating the virtual printed matter by the pagination processing unit on a display unit.

6. A program which causes a computer to function as means for generating pagination data for paginating at least one piece of printed matter having a plurality of page regions, the program causing the computer to function as:
a form information selection unit which selects form information related to the form of a final product obtained by processing the printed matter, and of the printed matter;
information acquisition units which acquire the form information selected by the form information selection unit;
a pagination processing unit which generates the pagination data by paginating virtual printed matter, which simulates the printed matter, based on the form information acquired by the information acquisition units; and
a display unit which three-dimensionally displays a process of paginating the virtual printed matter by the pagination processing unit.
